# EUROPEAN PATENT SPECIFICATION

(11) **EP 2 437 897 B1**
(45) Date of publication and mention of the grant of the patent: **29.05.2013**
(21) Application number: 10728915.9
(22) Date of filing: 04.06.2010
(51) Int. Cl.: B07C 5/00, B65G 17/36

(54) **APPARATUS FOR SORTING PRODUCTS, AND USE AND A CARRIER**
VORRICHTUNG ZUM SORTIEREN VON PRODUKTE, UND VERWENDUNG UND TRÄGER
APPAREIL POUR TRIER DES PRODUITS, ET SON UTILISATION ET SUPPORT

(30) Priority: 04.06.2009 EP 09007404
(43) Date of publication of application: 11.04.2012
(73) Proprietor: Aweta G&P B.V., 2631 HG Nootdorp (NL)
(72) Inventor: RUIGROK, Albertus Johannes, NL-2641 DP Pijnacker (NL)
(74) Representative: Jansen, Cornelis Marinus
(86) International application number: PCT/NL2010/050337
(87) International publication number: WO 2010/140888

(56) References cited:
- WO-A1-99/10262
- WO-A2-2006/006032

## Description

The present invention relates to an apparatus for sorting products.

In particular, the apparatus is an apparatus for sorting products, for example fruit, comprising an endless sorting conveyor for conveying products in at least one row in a substantially horizontal plane in a conveying direction T, wherein this conveyor at its beginning takes over the products from a supply unit and wherein the products are conveyed in separate, substantially horizontally positioned carriers arranged in the at least one row in succession with fixed intermediate distances, wherein the carriers are movable to unload a product between the beginning and the remote end of the conveyor from the carrier out of the row, wherein furthermore at least two discharge conveyors are provided for discharging the unloaded products.

Such an apparatus with such carriers is generally known and has been in use for years, for example for sorting fruit. In, for example, FR2871884 it is mentioned that the irregular shape of fruits or bulbous crops may present a problem in conveying and weighing during conveyance with such a sorting apparatus. The solution presented in that document shows a substantially egg-shaped cavity having in the edges two slits in the conveying direction. For this design it is mentioned that the irregularly shaped fruits fit better so that weighing can be done better.

In a further past, this problem was also indicated in US4262807. Reference was made to the then existing cups where the center of gravity of asymmetrical fruits in each case took up a different position with respect to the cup so that differences in weights could occur. As a solution for this, a cup was proposed having a centrally recessed portion having the shape of a truncated cone.

It has appeared to applicant that while these solutions are improvements over the then existing carriers, problems arise again at the present-day high speeds. In this field of technology of sorting products such as fruits and vegetables, for example, kiwis, apples, citrus fruits, tomatoes, these speeds range between 5 m/s and 25 m/s. In particular, it is endeavored more and more to convey and sort at speeds in the higher segment of this range, that is, considerably higher than 10 m/s.

The above-discussed carriers, holders, or cups have a substantially symmetrical shape, having no sides with straight parts but rather having all sides rounded. Preserving a fixed position during conveyance at high speed fails with such a shape, especially if products are somewhat smaller. For example, in the case of round products such as tomatoes, these speeds are found to cause a back-and-forth rolling of these products.

A further problem is that the inability to take up a fixed position has as a consequence that a second product is given an opportunity to settle into such a cup, leading to so-called 'double runners'.

WO99/10262 discloses a conveyor device for transporting fruits and vegetables, comprising a plurality of generally rectangular buckets.

WO2006/006032 discloses a system that includes cup assemblies, each including a standard fruit sizer 3-point or 4-point weighing cup.

To further improve the performance of such sorting machines, the apparatus, according to an advantageous aspect of the invention, is characterized by the features according to claim 1.

What is achieved, to great advantage, with such an asymmetrical shape is that a product always finds support in the widest part of the holder, carrier, or cup. Furthermore, it is found that this conveying position is taken up rapidly, that is, within a short period of time after transfer from a supply section.

In further embodiments, the apparatus according to the invention has one or more of the following features:
that the carriers are in the form of trays, having upper edges, a bottom portion, and sidewalls between the upper edges and the bottom portion, with the trays being tiltable for unloading;
that the projection of the upper edges on a substantially horizontal plane forms a polygon;
that the polygon in the plane possesses only one symmetry;
that the polygon forms a pentagon; and/or
that the trays are tiltable about an axis substantially parallel to the conveying direction, whereby the products being carried along, upon moving, are unloaded sideways with respect to the conveying direction.

A further advantage is achieved with carriers or cups substantially of regular pentagonal shape, where the phenomenon of 'double runners' has been found to be wholly avoidable. It is specifically also this advantage that contributes to the enlargement of the sorting capacity of such a sorting machine.

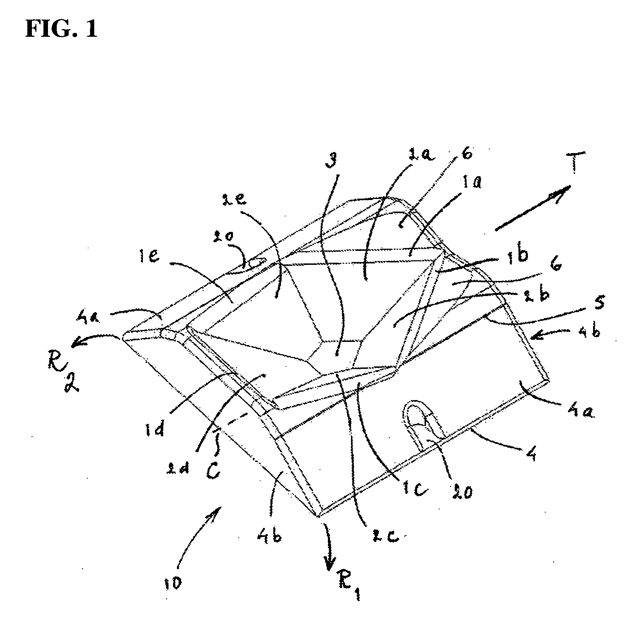

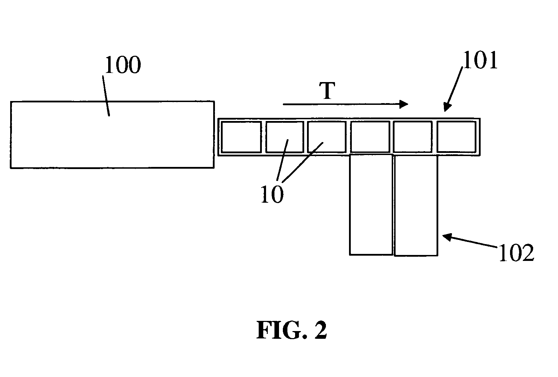

Further details of the apparatus according to the invention are elucidated on the basis of a drawing in which a cup according to Fig. 1 presents an isometric elevational view of an advantageous exemplary embodiment, and in which Fig. 2 schematically shows a top plan view of an exemplary embodiment of a sorting apparatus.

Fig. 2 shows schematically an apparatus for sorting products, for example, fruit, comprising an endless sorting conveyor 101 for conveying products in at least one row in a substantially horizontal plane in a conveying direction T. This conveyor 101 is designed for, at a beginning thereof, taking over the products from a supply unit 100. In addition, the conveyor 101 is designed for conveying the products in at least one row, by means of carriers 10 (also called cups). The carriers 10 in this example are arranged in succession with fixed intermediate distances and during conveyance of respective products (on the carriers) are substantially horizontally positioned. Each carrier 10 is preferably movable to unload a product lying thereon, for example to a discharge conveyor 102 (two specimens thereof are schematically represented in the example). Each discharge conveyor 102 is designed for discharging the unloaded products. The carriers 10 are, for example, each tiltable to unload the products at a desired discharge section (i.e., a respective discharge conveyor 102). As will be described below, each carrier preferably has a pentagonal shape (see Fig. 1). As a result, the products can each find a conveying position quickly, and the possibility can be prevented that further products can take up a position already taken up by a product. In this manner, a sorting capacity of the sorting machine can be further enlarged.

In Fig. 1 a single cup or carrier 10 is shown. Such a cup 10 is part of a row of cups arranged in line (see Fig. 2). Through a coupling piece (not shown) the cups 10 can each be connected at attachment points 20 to an endless conveyor of the sorting conveyor 101, for example, to a chain. The cups 10 are preferably tiltable about a centerline C.

During use, the cups 10 can convey the products placed in the cups in a conveying direction T as mentioned. The cups 10 are designed to convey the products from a loading position to a delivery position, and to this end may be conventionally positionable above a respective discharge conveyor 102. The discharge conveyor 102 is designed to carry the products further, for example to a packing station.

Delivery or unloading is done by tilting the cup 10 at the right time about centerline (C) following a direction R1 clockwise, or following a direction R2 counterclockwise, viewed in the conveying direction T. Upon tilting, the products roll out of the cup and are caught by a discharge conveyor 102. The earlier-mentioned coupling pieces are known to those skilled in the art and are so designed that when passing a load cell *inter alia* the weights of the products being carried along can be determined. Delivery or unloading form a step in the sorting of these products.
As follows from the drawing, each carrier is in the form of a tray, having upper edges, with a projection of the upper edges on a substantially horizontal plane forming a polygon. In the example, the polygon in the horizontal plane (i.e., after projection) has only one axis of symmetry. Furthermore, the present polygon advantageously forms a pentagon.

More in detail, the cup 10 comprises a recessed portion with edges 1, obliquely downwardly extending side surfaces 2, and a bottom 3. Contiguous to a circumferential edge 4 are outer edge parts 4a, 4b, adjoining the edges 1a-1e either directly or via intermediate pieces 6. The outer edge parts 4a end in a substantially straight transition line 5. However, at the transition of the edges 1b -1c and at 1e - 1a a small recess may be provided, yielding a more gradual course.

In the example shown, the outer edge parts 4b form a front side and rear side in the direction of conveying direction T. These outer edge parts, in the above-mentioned row, face similar outer edge parts of a cup arranged downstream or upstream.

In one of the practical exemplary embodiments, the holder, carrier, or cup 10 has circumferential dimensions for the rectangle of the cup's circumferential line, of 10 cm in the width direction by 9 cm in the conveying direction T. The distance between a cup and a successive or preceding cup is approximately 5 mm.

Such a row of cups is preferably placed substantially horizontally to ensure a stable transport during conveyance.

In the exemplary embodiment shown, the positioning of the cup 10 is indicated with a pointed portion at the front viewed in the conveying direction T. It will be clear to one skilled in the art that the pointed part may also be located on the upstream side. The choice for one positioning or the other will be determined, inter alia, by the shape of the type of product to be conveyed. Even a position with a pointed portion transverse to the conveying direction T may be considered.

To those skilled in the art, it will be clear that further variants are possible that are understood to be within the scope of protection of the appended claims.

## Claims

1. An apparatus for sorting products, for example fruit, comprising an endless sorting conveyor (102) for conveying products in at least one row in a substantially horizontal plane in a conveying direction (T),
wherein this conveyor at its beginning takes over the products from a supply unit (100) and wherein the products are conveyed in separate, substantially horizontally positioned carriers (10) arranged in said at least one row in succession with fixed intermediate distances, wherein the carriers (10) are movable to unload a product between said beginning and the remote end of the conveyor from the carrier (10) out of said row, wherein furthermore at least two discharge conveyors (102) are provided for discharging the unloaded products,
**characterized in that**
the carriers (10) are asymmetrical in shape and comprise a recessed portion with upper edges (1), obliquely downwardly extending side surfaces (2), and a bottom (3).

2. An apparatus according to claim 1, **characterized in that** the carriers (10) are in the form of trays, having the upper edges (1), a bottom portion, and sidewalls between the upper edges (1) and the bottom portion, with the trays being tiltable for said unloading.

3. An apparatus according to claim 1 or 2, **characterized in that** the carriers (10) are provided with the upper edges (1), a projection of the upper edges (1) on a substantially horizontal plane forming a polygon.

4. An apparatus according to claim 3, **characterized in that** the polygon in said plane has only one axis of symmetry.

5. An apparatus according to claim 3 or 4, **characterized in that** the polygon forms a pentagon.

6. An apparatus according to claim 5, wherein the pentagon is substantially a regular pentagon.

7. An apparatus according to any one of claims 1 to 6, **characterized in that** the carriers (10) aretiltable about an axis that is substantially parallel to the conveying direction, wherein the products being carried along, upon moving, are unloaded sideways with respect to the conveying direction.

8. An apparatus according to any one of the preceding claims, wherein said carrier (10) is positioned with a pointed portion at the front side viewed in the conveying direction (T).

9. An apparatus according to any one of claims 1-7, wherein said carrier (10) is positioned with a pointed portion at the rear side viewed in the conveying direction (T).

10. An apparatus according to any one of claims 1-7, wherein said carrier (10) is positioned with a pointed portion transverse to the conveying direction (T).

11. Use of an apparatus according to any one of the preceding claims, for sorting products, comprising taking over products from a supply unit by the sorting conveyor, conveying the products by the sorting conveyor, and moving the carriers to unload the products.

12. A product carrier of an apparatus according to any one of claims 1-10, the product carrier being asymmetrical in shape and comprising a recessed portion with upper edges (1), obliquely downwardly extending side surfaces (2), and a bottom (3).

13. A carrier according to claim 12, wherein the carrier (10) is in the form of a tray, having the upper edges (1), a bottom portion, and sidewalls between the upper edges and the bottom portion, with the upper edges (1) forming a pentagon.

## Patentansprüche

1. Vorrichtung zum Sortieren von Produkten, zum Beispiel Früchten, umfassend einen Endlossortierförderer (102) zum Transportieren von Produkten in mindestens einer Reihe in einer im Wesentlichen horizontalen Ebene in einer Förderrichtung (T), wobei dieser Förderer an seinem Anfang die Produkte von einer Zuführvorrichtung (100) übernimmt und wobei die Produkte in separaten, im Wesentlichen horizontal positionierten Trägern (10), angeordnet in der mindestens einen Reihe aufeinanderfolgend mit festen Zwischenabständen, transportiert werden, wobei die Träger (10) beweglich sind, um ein Produkt zwischen dem Anfang und dem entfernten Ende des Förderers von dem Träger (10) aus der Reihe auszuladen, wobei ferner mindestens zwei Ausladeförderer (102) bereitgestellt sind, um die ausgeladenen Produkte abzuführen,
**dadurch gekennzeichnet, dass**
die Träger (10) von asymmetrischer Form sind und einen vertieften Abschnitt mit oberen Kanten (1), schräg abwärts verlaufenden Seitenflächen (2) und einen Boden (3) umfassen.

2. Vorrichtung nach Anspruch 1, **dadurch gekennzeichnet, dass**
die Träger (10) eine Schalenform aufweisen, mit den oberen Kanten (1), einem Bodenteil und Seitenwänden zwischen den oberen Kanten (1) und dem Bodenteil, wobei die Schalen zum Entladen gekippt werden können.

3. Vorrichtung nach Anspruch 1 oder 2, **dadurch gekennzeichnet, dass** die Träger (10) mit den oberen Kanten (1) versehen sind, wobei ein Vorsprung der oberen Kanten (1) auf einer im Wesentlichen horizontalen Ebene ein Polygon bildet.

4. Vorrichtung nach Anspruch 3, **dadurch gekennzeichnet, dass** das Polygon in der Ebene nur eine Symmetrieachse aufweist.

5. Vorrichtung nach Anspruch 3 oder 4, **dadurch gekennzeichnet, dass** das Polygon ein Pentagon bildet.

6. Vorrichtung nach Anspruch 5, wobei das Pentagon im Wesentlichen ein regelmäßiges Pentagon ist.

7. Vorrichtung nach einem der Ansprüche 1 bis 6, **dadurch gekennzeichnet, dass**
die Träger (10) um eine Achse neigbar sind, die im Wesentlichen parallel zur Förderrichtung ist, wobei die beförderten Produkte beim Bewegen seitwärts in Bezug auf die Förderrichtung entladen werden.

8. Vorrichtung nach einem der vorhergehenden Ansprüche, wobei der Träger (10) mit einem spitzen Teil an der Vorderseite, gesehen in Förderrichtung (T), positioniert ist.

9. Vorrichtung nach einem der Ansprüche 1-7, wobei der Träger (10) mit einem spitzen Teil an der Hinterseite, gesehen in Förderrichtung (T), positioniert ist.

10. Vorrichtung nach einem der Ansprüche 1-7, wobei der Träger (10) mit einem spitzen Teil quer zur Förderrichtung (T) positioniert ist.

11. Verwendung einer Vorrichtung nach einem der vorhergehenden Ansprüche zum Sortieren von Produkten, umfassend das Übernehmen von Produkten von einer Zuführvorrichtung durch den Sortierförderer, das Befördern der Produkte durch den Sortierförderer und das Bewegen der Träger zum Ausladen der Produkte.

12. Produktträger einer Vorrichtung nach einem der Ansprüche 1-10, wobei der Produktträger eine asymmetrische Form aufweist und einen vertieften Abschnitt mit oberen Kanten (1), schräg abwärts verlaufenden Seitenflächen (2) und einen Boden (3) umfasst:

13. Träger nach Anspruch 12, wobei der Träger (10) die Form einer Schale aufweist, mit den oberen Kanten (1), einem Bodenteil und Seitenwänden zwischen den oberen Kanten und dem Bodenteil, wobei die oberen Kanten (1) ein Pentagon bilden.

## Revendications

1. Appareil destiné à trier des produits, par exemple des fruits, comprenant un transporteur trieur continu (102) pour transporter des produits en une rangée au moins dans un plan sensiblement horizontal dans une direction de transport (T) ;
dans lequel le transporteur prend les produits, au niveau de son début, à partir d'une unité d'approvisionnement (100) et dans lequel les produits sont transportés dans des supports séparés, positionnés de manière sensiblement horizontale (10) agencés dans ladite une rangée au moins de manière successive à des distances intermédiaires fixes, dans lequel les supports (10) sont mobiles pour décharger un produit, entre ledit début et la fin distante du transporteur, à partir du support (10) hors de ladite rangée, dans lequel en outre deux transporteurs d'évacuation (102) au moins sont prévus pour évacuer les produits déchargés ;
**caractérisé en ce que** :
les supports (10) présentent une forme asymétrique et comprennent une partie renfoncée avec des bords relevés (1), des surfaces latérales s'étendant vers le bas de manière oblique (2), et un fond (3).

2. Appareil selon la revendication 1, **caractérisé en ce que** les supports (10) se présentent sous la forme de plateaux, présentant des bords relevés (1), une partie de fond, et des parois latérales entre les bords relevés (1) et la partie de fond, les plateaux pouvant être inclinés pour ledit déchargement.

3. Appareil selon la revendication 1 ou 2, **caractérisé en ce que** les supports (10) sont dotés de bords relevés (1), une projection des bords relevés (1) sur un plan sensiblement horizontal formant un polygone.

4. Appareil selon la revendication 3, **caractérisé en ce que** le polygone dans ledit plan présente un seul axe de symétrie.

5. Appareil selon la revendication 3 ou 4, **caractérisé en ce que** le polygone forme un pentagone.

6. Appareil selon la revendication 5, dans lequel le pentagone est un pentagone sensiblement régulier.

7. Appareil selon l'une quelconque des revendications 1 à 6, **caractérisé en ce que** les supports (10) peuvent être inclinés autour d'un axe qui est sensiblement parallèle à la direction de transport, dans lequel les produits portés le long de celui-ci, lors du déplacement, sont déchargés sur le côté par rapport à la direction de transport.

8. Appareil selon l'une quelconque des revendications précédentes, dans lequel ledit support (10) est positionné avec une partie en pointe au niveau du côté avant quand on regarde dans la direction de transport (T).

9. Appareil selon l'une quelconque des revendications 1 à 7, dans lequel ledit support (10) est positionné avec une partie en pointe au niveau du côté arrière quand on regarde dans la direction de transport (T).

10. Appareil selon l'une quelconque des revendications 1 à 7, dans lequel ledit support (10) est positionné avec une partie en pointe en travers par rapport à la direction de transport (T).

11. Utilisation d'un appareil selon l'une quelconque des revendications précédentes, destiné à trier des produits, comprenant la prise par le transporteur trieur de produits à partir d'une unité d'approvisionnement, à transporter les produits par le transporteur trieur, et à déplacer les supports pour décharger les produits.

12. Support de produits d'un appareil selon l'une quelconque des revendications 1 à 10, le support de produit présentant une forme asymétrique et comprenant une partie renfoncée avec des bords relevés (1), des surfaces latérales s'étendant vers le bas de manière oblique (2), et un fond (3).

13. Support selon la revendication 12, dans lequel le support (10) se présente sous la forme d'un plateau, présentant des bords relevés (1), une partie de fond, et des parois latérales entre les bords relevés et la partie de fond, les bords relevés (1) formant un pentagone.
